# EUROPEAN PATENT APPLICATION

(11) **EP 2 769 795 A1**
(43) Date of publication of application: **27.08.2014**
(21) Application number: 12842323.3
(22) Date of filing: 03.10.2012
(51) Int. Cl.: B23G 5/00, B23B 27/02

(54) **CUTTING TOOL FOR SCREW THREAD CUTTING**

(30) Priority: 19.10.2011 JP 2011229447
(71) Applicant: Sumitomo Electric Hardmetal Corp., Itami-shi, Hyogo 664-0016 (JP)
(72) Inventor: KOJIMA, Chikako, Itami-shi Hyogo 664-0016 (JP); OKANO, Mitsuhide, Itami-shi Hyogo 664-0016 (JP); MURAKAMI, Reizo, Itami-shi Hyogo 664-0016 (JP)
(74) Representative: Grünecker, Kinkeldey, Stockmair & Schwanhäusser
(86) International application number: PCT/JP2012/075628
(87) International publication number: WO 2013/058110

(57) **Abstract**

An object of improvement is a threading tool that includes multiple cutting edges 3₋₁ to 3₋ₙ (where n is 5 in the drawings) disposed side by side and that performs threading successively using the multiple cutting edges to form a thread. At least one of the cutting edges of the tool except a finishing edge 3₋₅ is deviated in an opposite-to-feed-direction direction of the tool (may instead be the feed direction).

## Description

### Technical Field

The present invention relates to a threading tool called a chaser, and more specifically, it relates to a cutting tool that forms a screw thread by performing threading successively with multiple cutting edges that are included in a single tool and that include a finishing edge.

### Background Art

Examples of existing threading tools each including multiple cutting edges include the one disclosed in PTL 1 below, for example.

In a threading cutter described in PTL 1, multiple cutting edges are arranged in a threading roughing insert and a threading finishing insert (referred to as threading tools in this invention) so as to be disposed side by side at equal intervals in a tool axis direction (see Fig. 7 of PTL 1). The intervals at which the multiple cutting edges are arranged are equal to the pitch of a screw thread to be formed. Each cutting edge has a shape that is bilaterally symmetric with respect to its center line such that a share (share of cutting) on a front side of the center line in a feed direction and a share (share of cutting) on a rear side of the center line in the feed direction become equal to each other (see Fig. 8 in PTL 1).

The tool axis direction here is a direction in which a tool and a workpiece to be threaded are moved with respect to each other at the time of performing threading.

### Citation List

### Patent Literature

[PTL 1] Japanese Examined Patent Application Publication No. 7-90421

### Summary of Invention

### Technical Problem

In the threading cutter disclosed in PTL 1, the multiple cutting edges are arranged at intervals that are equal to the pitch of a screw thread to be formed. In addition, each cutting edge has a shape that is symmetric with respect to its center. Therefore, all chips generated by the cutting edges move toward the center of the cutter.

For this reason, the ejection efficiency of chips may become a problem particularly when an internal thread is formed on a bore surface of a workpiece. When a workpiece made of a special material, such as an oil well pipe, is threaded, chips that are difficult to cut are generated. If the structure of the chips is such that the chips continuously move toward the center of the cutter, the moving chips become more likely to come into contact with the bore surface of the workpiece, and the quality of the threaded surface is lowered by the contact.

In order to solve the above problems, an object of the present invention is to impart directionality to movement of chips, specifically, to lead chips in a tool axis direction. Solution to Problem

In order to solve the above problems, it is an object of the invention to improve a threading tool that includes multiple cutting edges disposed side by side and that performs threading successively with the multiple cutting edges to form a thread. At least one of the cutting edges of the tool except a finishing edge is deviated in a feed direction (toward a side of the tool from which the tool bites a workpiece) or in an opposite-to-feed-direction direction (that is opposite to the feed direction). The feed direction here is a direction in which the tool is fed to a workpiece.

In this threading tool, it is preferable that all the cutting edges, except the finishing edge or the last two edges (the finishing edge and a cutting edge immediately preceding the finishing edge), be deviated in the same direction.

The direction in which each cutting edge is deviated may be the feed direction, but it is preferable that each cutting edge be deviated in the opposite-to-feed-direction direction.

Deviating the multiple cutting edges by different deviation amounts or making a deviation amount of at least one of the cutting edges different from a deviation amount of other cutting edges is also effective.

In the case where at least one of the cutting edges, except the finishing edge or the last two edges, is deviated, it is desirable to deviate cutting edges that are located as far forward as possible in a deviation direction. For example, in the case of deviating cutting edges in the opposite-to-feed-direction direction toward a side on which the finishing edge is located, a favorable result can be expected if cutting edges that are located close to the finishing edge are deviated.

### Advantageous Effects of Invention

In the threading tool of this invention, at least one of the cutting edges except the finishing edge is deviated in a specific direction, and chips generated by using the deviated cutting edge move in a direction that is opposite to the deviation direction.

Here, the direction in which the chips more is the tool axis direction. Therefore, when an internal thread is formed on a bore surface of a workpiece, chips are less likely to contact the bore surface of the workpiece, so that the quality of the threaded surface due to the contact is prevented from deteriorating.

Operations and effects of the configurations that are described as being preferable above will be described below.

### Brief Description of Drawings

[Fig. 1] Figure 1 is a front view of a threading tool according to a first embodiment of the invention.
[Fig. 2] Figure 2 is a left side view of the threading tool illustrated in Fig. 1.
[Fig. 3] Figure 3 is an enlarged cross-sectional view of a portion taken along the line III-III of Fig. 1.
[Fig. 4] Figure 4 is an enlarged front view of edges of the threading tool illustrated in Fig. 1.
[Fig. 5] Figure 5 illustrates share-of-cutting ranges (shares) of cutting edges of the threading tool illustrated in Fig. 1.
[Fig. 6] Figure 6 is a front view of a threading tool according to a second embodiment of the invention.
[Fig. 7] Figure 7 is an enlarged front view of edges of the threading tool illustrated in Fig. 6.
[Fig. 8] Figure 8 illustrates share-of-cutting ranges (shares) of cutting edges of the threading tool illustrated in Fig. 6.

### Description of Embodiments

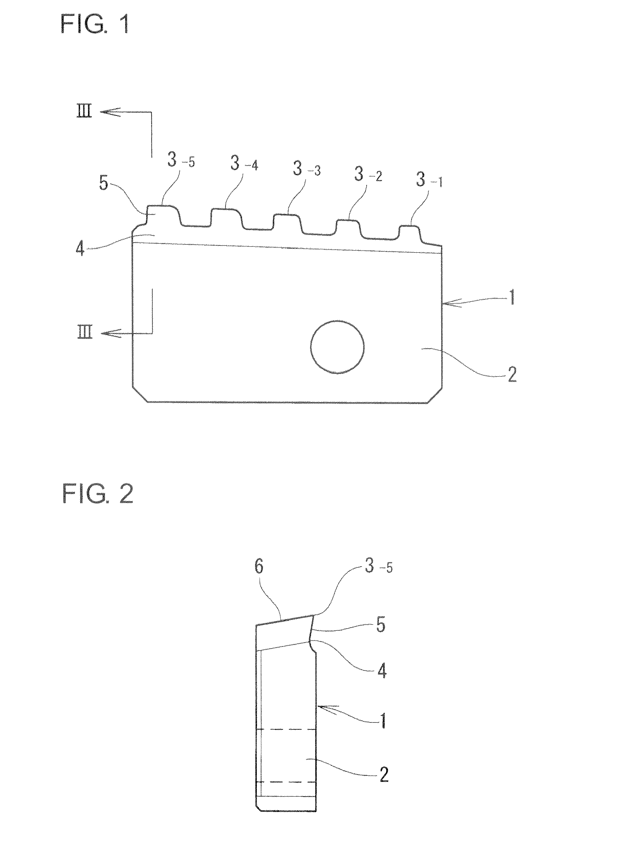

Referring to the attached drawings from Fig. 1 to Fig. 8, embodiments for a threading tool of the invention will be described below.

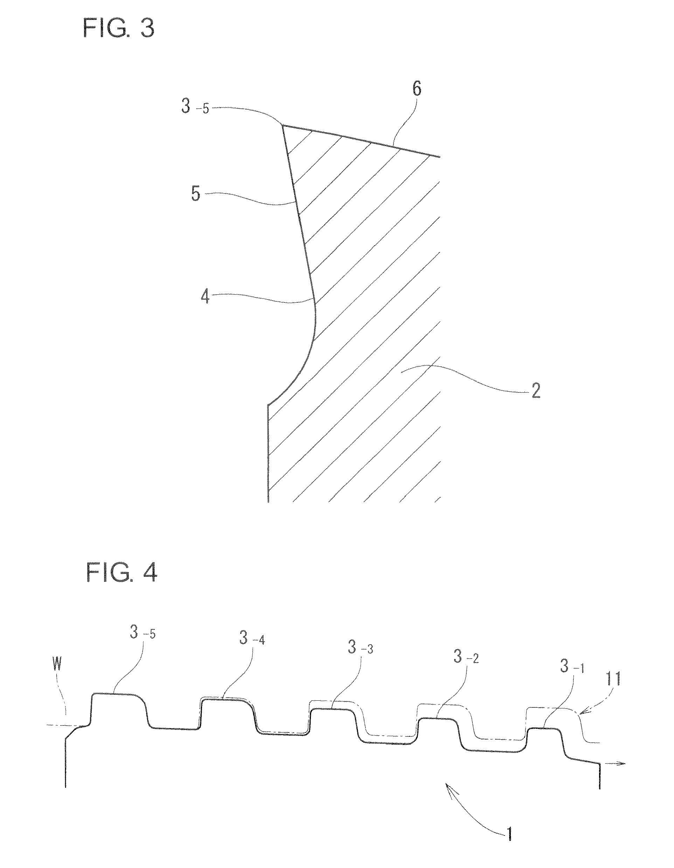

A threading tool 1 according to a first embodiment illustrated in Fig. 1 to Fig. 5 is used to machine a trapezoidal screw thread (pipe-joining taper thread for oil well pipes) 11 indicated by a two-dot chain line in Fig. 4, and has first to fifth five cutting edges 3₋₁ to 3₋₅. The first cutting edge 3₋₁ is an edge that bites a workpiece W first. An operation of roughly forming a screw thread is performed by using the first cutting edge 3₋₁, the second cutting edge 3_{-2,} the third cutting edge 3₋₃, and the fourth cutting edge 3₋₄, and a groove and a screw thread are finished by using the fifth cutting edge 3₋₅.

A breaker flute 4 is formed in a base portion 2 of the tool, and a ridgeline at which a rake face 5 and a flank face 6 meet serves as a cutting edge 3. The cutting edge 3 is subjected to edge-reinforcement processing as needed. The breaker flute 4 may be excluded, and the tool may be used in combination with a separate breaker piece (not illustrated).

Cutting edges from the first cutting edge 3₋₁ to the third cutting edge 3₋₃ among the cutting edges except the fifth cutting edge 3₋₅ are deviated toward a side on which the fifth cutting edge 3₋₅ is located. Although the fourth cutting edge 3₋₄ may also be deviated in the same direction, it is preferable not to deviate the fourth cutting edge 3₋₄ because shares on all portions of the finishing edge are made equal when an edge immediately preceding the finishing edge (the fifth cutting edge 3₋₅, here) is not deviated.

Considering the durability and finishing accuracy, it is preferable that the finishing edge bear a smaller share of the cutting than other edges and that cutting be equally performed by using all the portions of the finishing edge. The exemplified tool satisfies these demands by making the fourth cutting edge 3₋₄ be an edge that is not deviated.

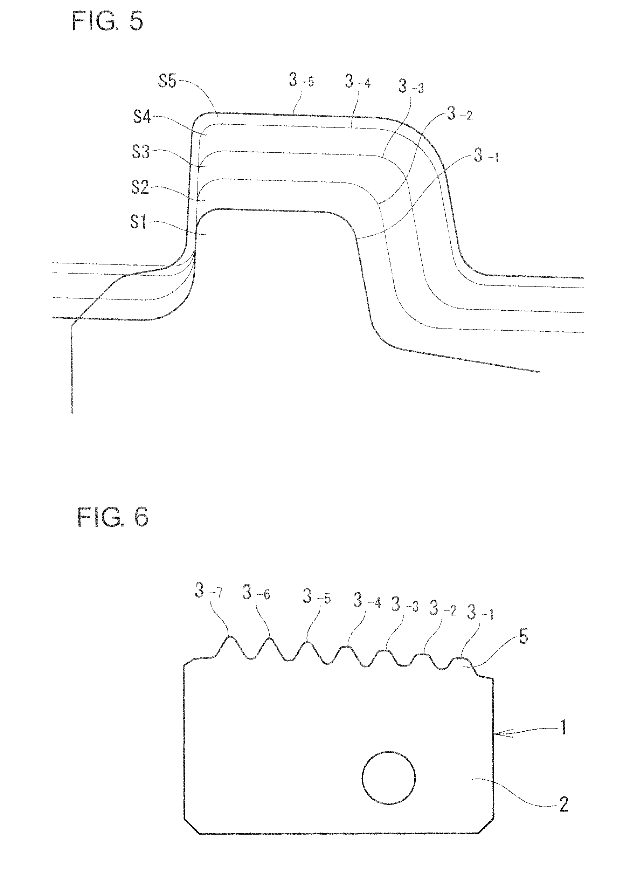

Reference symbols S1 to S5 in Fig. 5 respectively denote shares of the first cutting edge 3₋₁ to the fifth cutting edge 3₋₅. As found in Fig. 5, the first cutting edge 3₋₁ to the third cutting edge 3₋₃ have an edge shape such that their shares are made equal to one another, but these cutting edges may bear different amounts of the cutting in the radial direction of the cutting edges or be deviated by different deviation amounts in the axial direction. It is not necessarily required that a left-end edge of the third cutting edge 3₋₃ (an end closer to the fifth cutting edge 3₋₅) and a left-end edge of the second cutting edge 3₋₂ be disposed at positions that coincide with each other.

As illustrated in Fig. 4, when the first to third cutting edges 3₋₁ to 3₋₃ are deviated toward the fifth cutting edge 3₋₅, chips generated by the first to third cutting edges 3₋₁ to 3₋₃ move in the direction of the arrow illustrated in Fig. 4 (the feed direction of the tool). Since the feed direction is a direction away from a side on which the finishing edge is located, a problem that a finished thread is damaged by chips is less likely to occur.

In this configuration, if the third cutting edge 3₋₃ is only deviated toward the fifth cutting edge 3₋₅ now, chips generated by the third cutting edge 3₋₃ try to move in the direction of the arrow illustrated in Fig. 4, while being accompanied by chips generated by the second cutting edge 3₋₂ and the first cutting edge 3₋₁. Since this leading effect can be obtained, the effect of the invention can be expected even in the case where only one cutting edge is deviated.

The cutting edges to be deviated in a specific direction may be deviated by the same deviation amount. However, if deviation amounts differ from one another, the cutting edges that are deviated by the different deviation amounts generate chips having different thicknesses. This makes the chips move in directions that are slightly different from one another and thus the likelihood of the chips interfering with one another is reduced. This effect can be expected even in the case where one cutting edge is deviated by a deviation amount different from that of other cutting edges.

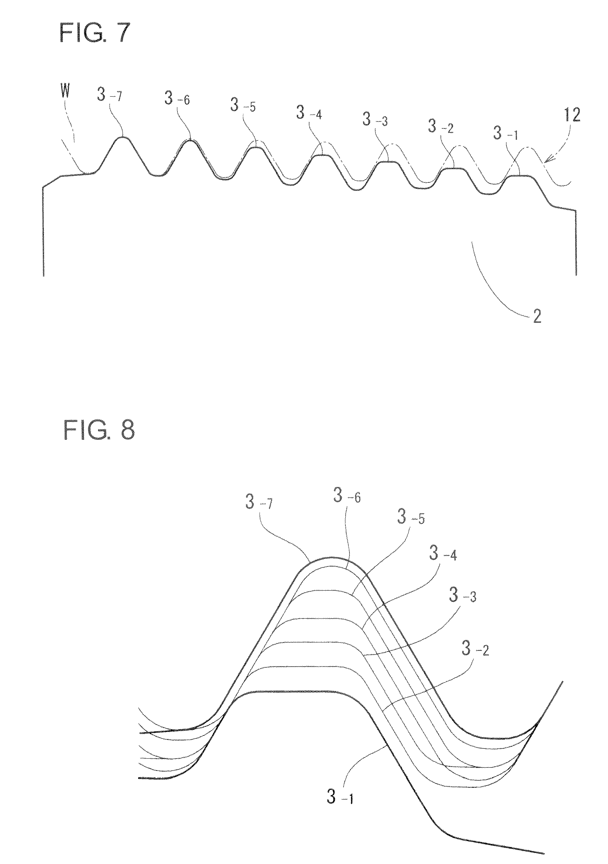

Fig. 6 to Fig. 8 illustrate a threading tool according to a second embodiment. The threading tool according to the second embodiment is used to machine a triangular screw thread 12 indicated by a two-dot chain line in Fig. 7 and includes first to seventh seven cutting edges 3₋₁ to 3₋₇. The first cutting edge 3₋₁ is an edge that bites a workpiece W first. An operation of roughly forming a screw thread is performed by using the first cutting edge 3₋₁, the second cutting edge 3₋₂, the third cutting edge 3₋₃, the fourth cutting edge 3₋₄, the fifth cutting edge 3₋₅, and the sixth cutting edge 3₋₆, and a groove and a screw thread are finished by using the seventh cutting edge 3₋₇.

A base portion 2 of the tool has a configuration that does not include a chip breaker. Even with this configuration, the base portion 2 may be combined with a separate breaker piece, if needed, to obtain a function to deal with chips. Alternatively, a base portion 2 including a chip breaker may be used in the same manner as in the case of the first embodiment.

In a cutting tool 1 according to the second embodiment, cutting edges from the first cutting edge 3₋₁ to the fifth cutting edge 3₋₅ among the cutting edges except the seventh cutting edge 3₋₇ are deviated toward a side on which the seventh cutting edge 3₋₇ is located. Although the sixth cutting edge 3₋₆ may be deviated in the same direction, it is preferable that the sixth cutting edge 3₋₆ be not deviated for the same reason as described in the first embodiment.

As described above, it is preferable that a finishing edge bear a small share of the cutting and cutting be equally performed by using all the portions of the finishing edge. The tool according to the second embodiment satisfies these demands by making the sixth cutting edge 3₋₆ to be an edge that is not deviated.

The number or the shape of cutting edges of a threading tool to which the invention is applied is not particularly limited. The configuration described as being preferable in the first embodiment can be also adopted as a configuration that is preferable in the second embodiment. In the above embodiments, the description has been given by taking a trapezoidal screw thread and a triangular screw thread as examples. However, it goes without saying that the threading tool can be used to form threads having other shapes such as a buttress thread.

### Reference Signs List

1 threading tool
2 base portion
3₋₁ to 3₋₇ cutting edge
4 breaker flute
5 rake face
6 flank face
11 trapezoidal screw thread
12 triangular screw thread

## Claims

1. A threading tool comprising a plurality of cutting edges disposed side by side, the threading tool performing threading successively using the plurality of cutting edges to form a thread, wherein at least one of the cutting edges of the tool except a finishing edge is deviated in a feed direction of the tool or in an opposite-to-feed-direction direction of the tool.

2. The threading tool according to Claim 1, wherein all the cutting edges, except the finishing edge or except the finishing edge and a cutting edge immediately preceding the finishing edge, are deviated in the same direction.

3. The threading tool according to Claim 1 or 2, wherein cutting edges to be deviated are all deviated in the same direction and in the opposite-to-feed-direction direction of the tool.

4. The threading tool according to any one of Claims 1 to 3, wherein some of the plurality of cutting edges are deviated in a specific direction, and at least one of the deviated cutting edges is deviated by a deviation amount that is different from a deviation amount by which another cutting edge is deviated.
